# EUROPÄISCHE PATENTSCHRIFT

(11) **EP 3 410 887 B1**
(45) Veröffentlichungstag und Bekanntmachung des Hinweises auf die Patenterteilung: **30.12.2020**
(21) Anmeldenummer: 17705559.7
(22) Anmeldetag: 25.01.2017
(51) Int. Cl.: A45C 13/30, G03B 17/56, A45F 3/14, A45F 5/00

(54) **TRAGESYSTEM ZUM TRAGEN EINES GEGENSTANDES**
CARRYING SYSTEM FOR CARRYING AN OBJECT
SYSTÈME DE TRANSPORT PERMETTANT DE TRANSPORTER UN OBJET

(30) Priorität: 03.02.2016 DE 102016101876; 17.05.2016 DE 102016208412
(43) Veröffentlichungstag der Anmeldung: 12.12.2018
(73) Patentinhaber: Hoffmann, Carsten, 81925 München (DE)
(72) Erfinder: DEUSCHL, Carina, 81667 München (DE); HOFFMANN, Carsten, 81925 München (DE)
(74) Vertreter: Himmelsbach, Mathias
(86) Internationale Anmeldenummer: PCT/EP2017/051482
(87) Internationale Veröffentlichungsnummer: WO 2017/133937

(56) Entgegenhaltungen:
- EP-A1- 3 127 450
- CN-U- 203 630 494
- JP-A- 2006 130 264
- US-A1- 2013 101 784

## Beschreibung

Die Erfindung betrifft einen Tragegurt mit einem Gurtband und wenigstens einer Befestigungseinrichtung zum Befestigen eines tragbaren Gegenstands, wie z. B. einer Kamera. Die Erfindung betrifft ferner ein Tragesystem mit einem solchen Tragegurt und einer Fixiereinrichtung, mittels derer der Tragegurt an einem Bekleidungsstück oder einem Rucksack befestigt werden kann.

Tragevorrichtungen zum Tragen von Kameras, Taschen oder anderen mobilen Geräten gibt es in den verschiedensten Ausführungen. Leichtere Kameras, wie z. B. Kleinformatkameras, sind üblicherweise mit einer Handschlaufe ausgestattet, die über die Hand gelegt wird. Schwerere Kameras, wie z. B. Spiegelreflexkameras, werden dagegen üblicherweise mit einem Nacken- oder Schultergurt getragen, den der Nutzer um den Hals bzw. über die Schulter trägt.

Aus dem Stand der Technik sind auch andere Tragesysteme bekannt, bei denen eine Kamera über kurze Riemen an den Schultergurten eines Rucksacks befestigt wird. Die Kamera hängt beim Gehen frei nach unten und wird dabei von den Schultergurten des Rucksacks gehalten. Ein solches Tragesystem hat jedoch den Nachteil, dass die Bewegungsfreiheit bei der Nutzung der Kamera stark eingeschränkt ist, da die Befestigungsriemen in der Regel relativ kurz ausgeführt sind. Eine freie Handhabung der Kamera wird dadurch erschwert, insbesondere wenn die Kamera vor das Auge bzw. ins Gesichtsfeld geführt werden soll. Eine Verlängerung der Riemen würde zwar die Bewegungsfreiheit verbessern, aber unweigerlich dazu führen, dass die Kamera beim Gehen zu stark vor dem Körper herum baumelt. Ein weiterer Nachteil ist, dass die Verbindung für einige Arten von Aufnahmen manuell gelöst werden muss. Ein solches System ist beispielsweise aus JP 2006 130 264 A bekannt. Dieses System weist zusätzlich zum Tragegurt der Kamera zwei zusätzliche Befestigungsriemen zwischen dem Tragegurt und den Schultergurten des Rucksacks auf. Die Befestigungsriemen sind durch einen Clip-Verschluss trennbar, so dass die Kamera vom Rucksack lösbar ist. Das Lösen und Verbinden ist jedoch relativ umständlich, da in der Regel beide Hände hierfür benötigt werden. Bei verbundenen Befestigungsriemen ist es z. B. nicht möglich, die Kamera über den Kopf zu heben, um über Menschenmengen hinweg zu fotografieren. Es ist auch nicht möglich, die Kamera am gestreckten Arm auf Augenhöhe zu benutzen. Da moderne Kameras über Displays für die Bildkomposition verfügen, werden die beschriebenen Arten von Aufnahmen heute relativ häufig gemacht.

Es ist daher eine Aufgabe der vorliegenden Erfindung, einen Tragegurt sowie ein Tragesystem zum Tragen von Gegenständen, insbesondere Kameras oder anderen mobilen Geräten, zu schaffen, mittels dessen der Gegenstand derart befestigt werden kann, dass er beim Gehen nur minimal vor dem Körper herum baumelt und gleichzeitig eine nahezu uneingeschränkte Handhabung des befestigten Gegenstands möglich ist.

Gelöst wird diese Aufgabe gemäß der Erfindung durch die in den unabhängigen Ansprüchen angegebenen Merkmale. Weitere Ausgestaltungen der Erfindung ergeben sich aus den Unteransprüchen.

Gemäß der Erfindung wird ein Tragegurt mit einem Gurtband und wenigstens einer Befestigungseinrichtung zum Befestigen eines tragbaren Gegenstands, wie z. B. einer Kamera, vorgeschlagen, an dem wenigstens ein erstes Schnellverschlusselement (direkt oder indirekt) befestigt ist, welches Bestandteil eines Schnellverschlussmechanismus ist, der das erste und ein korrespondierendes zweites Schnellverschlusselement aufweist, wobei das erste Schnellverschlusselement aus einer Verriegelungsposition, in welcher das zweite Schnellverschlusselement mit dem ersten Schnellschlusselement verriegelt ist, entlang einer ersten Richtung vom korrespondierenden zweiten Schnellschlusselement lösbar ist und entlang einer zweiten Richtung in die Verriegelungsposition verbringbar ist. Das erste Schnellverschlusselement ist vorzugsweise derart ausgebildet, dass es durch bloßen Zug am Gurtband von dem korrespondierenden zweiten Schnellverschlusselement gelöst werden kann. Das zweite Schnellverschlusselement kann beispielsweise an einem Kleidungsstück oder einem Rucksack angeordnet sein. Im eingehängten bzw. gekoppelten oder verriegelten Zustand der beiden Schnellverschlusselemente wird der getragene Gegenstand vom Kleidungsstück bzw. Rucksack gehalten. Wenn der Gegenstand benutzt werden soll, kann er insbesondere durch einfachen Zug und/oder Druck bzw. Schieben am Gurtband vom Kleidungsstück bzw. Rucksack gelöst werden. Eine Kamera, die mittels eines Gurtbandes, welches als Schulter- oder Nackengurts ausgebildet ist, getragen wird, kann im unbenutzten Zustand beispielsweise mittels des Schnellverschlussmechanismus an einem Kleidungsstück oder Rucksack eingehängt werden.

Wenn die Kamera benutzt werden soll, kann sie insbesondere durch Zug am Gurtband vom Kleidungsstück bzw. Rucksack gelöst und vor das Auge bzw. ins Gesichtsfeld, aber auch über den Kopf oder am gestrecktem Arm auf Augenhöhe des Fotografen geführt werden, ohne dass hierfür zusätzliche Handgriffe erforderlich wären. Im gelösten Zustand kann der Fotograf mit der Kamera nach Belieben hantieren, da die Bewegungsfreiheit durch den nun gelösten Schnellverschluss nicht mehr beeinträchtigt wird.

Das am Tragegurt angeordnete erste Schnellverschlusselement kann beispielsweise direkt am Gurtband befestigt sein oder indirekt, beispielsweise über einen Riemen oder ein Seil, mit dem Gurtband verbunden sein. Auch ist das erste Schnellverschlusselement an flügelähnlichen Elementen, welche vom Gurtband abstehen, anbringbar.

Das Verbringen in die Verriegelungsposition nach dem Gebrauch der Kamera soll ebenfalls in einfacher Art und Weise erfolgen. Das Gurtband ist dazu vorzugsweise derart steif ausgebildet, dass bei einer Verschiebung der Enden des Gurtbands zum Verriegeln in Richtung eines Scheitelpunktes des im Wesentlichen U-förmigen Gurtbandes sich zumindest Bereiche von zwei sich vom Scheitelpunkt weg erstreckenden Schenkeln des Gurtbandes bogenförmig in den Bereich der Verriegelungsposition auseinander bewegen. In der Praxis weist ein tragbarer Gegenstand, wie dies beispielsweise bei einer Kamera häufig der Fall ist, an zwei gegenüberliegenden Enden Ösen zur Aufnahme eines Gurtbandes auf. Das Gurtband ist dabei über zwei Befestigungseinrichtungen mit dem tragbaren Gegenstand verbunden. Durch Anheben des tragbaren Gegenstands bzw. der Enden des Gurtbandes, was in diesem Fall eine Parallelverschiebung darstellt, werden die ersten Schnellverschlusselemente nach oben und/oder außen bewegt.

Zwischen diesen beiden Befestigungspunkten ist das Gurtband im Gebrauch, beispielsweise beim Umhängen der Kamera um den Hals, U-förmig ausgebildet. Das Gurtband weist an einem dem tragbaren Gegenstand gegenüberliegenden Ende, das heißt, in dem Bereich, in dem das Gurtband beispielsweise am Hals des Trägers anliegt, den Scheitelpunkt auf. Von diesem Scheitelpunkt weg erstrecken sich zwei Schenkel hin zu der zumindest einen Befestigungseinrichtung.

Bei einer alternativen Ausbildung weist der Tragegurt nur eine einzige Befestigungsvorrichtung auf, mit welcher die Kamera beispielsweise am Stativgewinde befestigbar ist. In einem solchen Fall erstrecken sich die beiden Schenkel jeweils von der Befestigungseinrichtung hin zum Scheitelpunkt bzw. Scheitelpunkt zu der Befestigungseinrichtung. Bei einer solchen Ausführung ist das Gurtband als geschlossener Ring ausbildbar.

Das erfindungsgemäße Gurtband ist derart steif ausgebildet, dass bei einer Verschiebung der Enden des Gurtbands in Richtung des Scheitelpunktes sich zumindest Bereiche der Schenkel des Gurtbandes bogenförmig auseinander bewegen. Die bogenförmig sich auseinander bewegenden Bereiche bewegen sich dabei in den Bereich der Verriegelungsposition. In der Praxis sind häufig zwei zweite Schnellverschlusselemente an einem Kleidungsstück bzw. an den Schultergurten eines Rucksacks befestigt. Die beiden zweiten Schnellverschlusselemente sind dabei weiter voneinander entfernt als die beiden ersten Schnellverschlusselemente, welche sich am Gurtband befinden. Um die ersten Schnellverschlusselemente mit den jeweiligen zweiten Schnellverschlusselementen in Eingriff zu bringen, müssen die beiden ersten Schnellverschlusselemente auseinander bewegt werden. Die erfindungsgemäße Vorrichtung hat den Vorteil, dass durch ein Anheben der Kamera bzw. der Befestigungseinrichtung oder der Enden des Gurtbandes die beiden ersten Schnellverschlusselemente in den Bereich der zweiten Schnellverschlusselemente gebracht werden können, um die beiden korrespondierenden Schnellverschlusselemente zu verriegeln. Auch können die beiden Enden des Gurtbandes auseinander bewegt werden, wodurch sich die beiden ersten Schnellverschlusselemente aufgrund der Steifigkeit des Gurtbandes ebenfalls auseinander in den Bereich der zweiten Schnellverschlusselemente bewegen. Dazu muss die Kamera nicht zuerst abgesetzt und die ersten Schnellverschlusselemente bzw. das Gurtband müssen auch nicht selbst angefasst und in den Bereich der zweiten Schnellverschlusselemente gebracht werden.

Hierfür ist die Steifigkeit in einer geeigneten Art und Weise auszuwählen. Ist die Steifigkeit des Gurtbandes zu gering, hängen bei einem Anheben der Kamera bzw. der Enden des Gurtbandes beidseitig vom tragbaren Gegenstand jeweils eine U-förmige Schlaufe nach unten, ohne dass sich die beiden Schenkel auseinander bzw. nach oben bewegen. Dies ist beispielsweise der Fall bei den gängigen Tragegurten für Kameras. Ist die Steifigkeit des Gurtbandes zu hoch, so hebt das Gurtband beispielsweise vom Hals des Trägers ab, ohne dass sich die U-Form verändert. Demzufolge ist eine mittlere Steifigkeit zwischen diesen beiden Extremen zu wählen, welche zum gewünschten erfindungsgemäßen Gurtband führt. Das Biegeverhalten kann dabei von der U-Form des Gurtbandes dahingehend unterstützt werden, dass das Gurtband bereits eine abschnittsweise bogenförmige Ausbildung aufweist und diese verstärkt bzw. ausgeweitet wird. Somit ist die Bewegungsrichtung, in welcher sich der Bogen ausbildet, bereits vorgegeben. Sowohl die Drucksteifigkeit in Längsrichtung des Gurtbandes als auch die Biegesteifigkeit in Querrichtung haben einen Einfluss auf die Steifigkeit und das Verhalten des Gurtbandes.

Unter der Bezeichnung "Gurt" oder "Gurtband" wird im Rahmen dieser Anmeldung jedes band- oder seilförmige Element verstanden, wie z. B. eine Flachband, ein Riemen, ein Seilstück, beispielsweise von Kletter- oder Statikseilen, und dergleichen. Die Patentansprüche erstrecken sich entsprechend auf sämtliche Ausführungen und sind insbesondere nicht auf flache Gurte beschränkt. Zur Erlangung der gewünschten Steifigkeit des Gurtbandes kann beispielsweise ein Stahlseil in ein textiles Gurtband eingearbeitet sein bzw. das Stahlseil ist von einem textilen Gurtband umschlossen. Gleiches ist auch mit einem Kunststoffelement ausbildbar. Alternativ kann ein textiles Gurtband mit Fasern versteift sein, welche in das Gewebe eingewoben sind. Als Fasern können beispielsweise Karbon- oder Kompositfasern verwendet werden. In einer weiteren Ausbildung ist die gewünschte Stabilität/Steifigkeit auch durch eine entsprechende Herstellung des Gurtbandes, insbesondere eine entsprechende Web- oder Knüpftechnik, herstellbar. Dabei weißt das Gurtband insbesondere einen im Wesentlichen kreisrunden Querschnitt auf.

Der vorstehend beschriebene Schnellverschlussmechanismus ist vorzugsweise derart ausgebildet, dass die korrespondierenden ersten und zweiten Schnellverschlusselemente im gekoppelten Zustand eine formschlüssige Verbindung eingehen. Der Schnellverschlussmechanismus kann beispielsweise als ein Einhak- oder Druckknopfmechanismus ausgeführt sein. Zusätzlich kann der Schnellverschlussmechanismus auch einen Magneten oder eine Schnappverbindung umfassen. Der Magnet ist dabei derart ausgebildet, dass er den Verriegelungsvorgang entlang der ersten Richtung unterstützt. Somit wird das erste Schnellverschlusselement lediglich in den Bereich des zweiten Schnellverschlusselements gebracht und die Magnetkraft bewirkt eine Bewegung des ersten Schnellverschlusselements in der zweiten Richtung. Die zweite Richtung ist vorzugsweise derart ausgebildet, dass sie orthogonal zum U-förmigen Gurtband verläuft und/oder auf den Körper des Trägers gerichtet ist. Gemäß der Erfindung ist die erste Richtung orthogonal zur zweiten Richtung und verläuft vorzugsweise im Gebrauch des Gurtes im Wesentlichen entgegen der Schwerkraftrichtung. Dies führt dazu, dass ein ungewolltes Lösen des ersten Schnellverschlusselements vom zweiten Schnellverschlusselement durch die Schwerkraft erschwert wird. Alternativ ist ein solches ungewolltes Lösen beispielsweise durch eine zusätzliche Sicherungseinrichtung wie einen Riegel, ein eine Haltekraft aufbringendes Rückhaltelement wie beispielsweise eine Feder oder dergleichen ausbildbar. Die erste und die zweite Richtung zum Öffnen bzw. Schließen sind orthogonal zueinander ausgerichtet.

Gemäß einer bevorzugten Ausführungsform der Erfindung ist der Schnellverschlussmechanismus derart ausgebildet, dass sich die korrespondierenden ersten und zweiten Schnellverschlusselemente nur bei Zug bzw. Druck in einer bestimmten Richtung, d. h. in der ersten Richtung, voneinander lösen, bei Zug in einer anderen Richtung aber nicht lösen.

Der Schnellverschlussmechanismus ist vorzugsweise derart ausgebildet, dass sich die Verbindung automatisch löst, wenn der Gegenstand - insbesondere eine Kamera oder ein anderes optisches Gerät - vor das Auge bzw. ins Gesichtsfeld nach oben geführt wird. Bevorzugt lässt sich der Schnellverschlussmechanismus nur entlang einer ersten Richtung, beispielsweise durch Zug am Gurtband in dieser Richtung, öffnen. Die erste Richtung ist insbesondere derart ausgestaltet, dass sie beim Tragen nach oben hin ausgerichtet ist. Bei Zug nach unten, vorne oder zur Seite sollte sich der Schnellverbindungsmechanismus aber nicht. Durch eine derartige Ausgestaltung wird der Schnellverschlussmechanismus durch die Schwerkraft in der Verriegelungsposition gehalten.

Gemäß einer speziellen Ausführungsform eines Tragegurts mit zwei ersten Schnellverschlusselementen sind diese vorzugsweise jeweils im gleichen Abstand zu den Befestigungseinrichtungen bzw. Anknüpfungspunkten, an denen der getragene Gegenstand am Tragegurt befestigt ist, am Gurtband angeordnet.

Bei Tragegurten mit einem einzigen Anknüpfungspunkt - beispielsweise einer Schraubeinrichtung zum Befestigen einer Kamera an deren Stativgewinde - sind die beiden ersten Schnellverschlusselemente vorzugsweise im gleichen Abstand zu dem Anknüpfungspunkt angeordnet.

Die beiden ersten Schnellverschlusselemente sind auch vorzugsweise derart am Gurtband angeordnet (direkt oder über einen Ausleger/Flügel), dass das Gurtband, wenn es um den Nacken getragen wird, im eingehakten bzw. befestigten Zustand hinter dem Kopf zumindest einige cm Spiel hat und das Gurtband somit entlastet ist.

Die Lage des Schnellverschlussmechanismus, insbesondere des ersten Schnellverschlusselements, ist vorzugsweise relativ zum tragbaren Gegenstand als auch relativ zum Scheitelpunkt des Gurtbandes einstellbar. Dadurch ist beim Tragen die Länge zum Scheitelpunkt so einstellbar, dass, in verriegeltem Zustand, das Gurtband nicht am Hals des Trägers anliegt. Über die Länge zwischen erstem Schnellverschlusselement und Befestigungseinrichtung ist die Traghöhe des tragbaren Gegenstands einstellbar. In einer ersten Alternative verfügt der Tragegurt vorzugsweise über wenigstens zwei Längenverstellungen, so dass sich die Länge des Tragegurtes sowohl oberhalb als auch unterhalb eines Schnellverschlusselements verstellen lässt. Die Längenverstellung oberhalb des ersten Schnellverschlusselements erlaubt es die Länge an unterschiedliche Körpergrößen und unterschiedliche Kleidung (Schal, Jacke mit Mütze, etc.) anzupassen. Die Längenverstellung unterhalb des ersten Schnellverschlusselements ermöglicht es, den Gegenstand auf der gewünschten Höhe zu tragen.

In einer zweiten Alternative ist das erste Schnellverschlusselement entlang des Gurtbandes verschiebbar und auch fixierbar. Durch Fixieren in einer Position ist sowohl die Länge zum Scheitelpunkt, als auch der Abstand zu den Befestigungseinrichtungen verstellbar. Die Befestigungseinrichtungen können ferner zusätzliche Längenverstelleinrichtungen aufweisen, insbesondere um die Gesamtlänge des Tragegurts einzustellen. Die vorzugsweise kontinuierlich verschieblich ausgebildeten Schnellverschlusselemente sind über eine Klemmung am Gurtband fixierbar. In einer besonders bevorzugten Ausführung wird die Klemmung über einen Exzenter ausgeübt, der eine Kraft im Wesentlichen orthogonal zur Längsausdehnung des Gurtbandes ausübt. Das Gurtband ist in einer Gurtaufnahme am ersten Schnellschlusselement gehalten und durch Drehen des Exzenters wird eine Klemmkraft auf das Gurtband ausgeübt. Der Exzenter bzw. das die Klemmkraft auf das Gurtband übertragende Klemmelement kann im Bereich des Eingriffs mit dem Gurtband insbesondere eine profilierte Oberfläche, beispielsweise mit Schuppen, Riffelungen, Zähnen oder dergleichen aufweisen.

Die vorliegende Erfindung betrifft auch ein Tragesystem mit einem Tragegurt nach einer der vorstehend beschriebenen Ausführungsformen sowie einem Adapter mit wenigstens einem zweiten Schnellverschlusselement, wobei der Adapter dazu ausgelegt ist, an einem Kleidungsstück oder einem Rucksack befestigt zu werden.

Der Adapter umfasst vorzugsweise eine Fixiereinrichtung, wie z. B. einen Klettverschluss, einen Druckknopfmechanismus oder einen Gummizug bzw. eine elastische Klemmverbindung, mit der er schnell und einfach an der Trageinrichtung (z. B. einem Kleidungsstück oder einem Rucksack) befestigt werden kann.

Der Adapter bzw. die Fixiereinrichtung kann z. B. als eine Art Klammer ausgebildet sein, mit zwei Armen, die auf einer Seite gelenkig miteinander verbunden sind. Auf der anderen Seite der Arme kann z. B. ein Rastmechanismus vorgesehen sein.

Gemäß einer anderen Ausführungsform kann der Adapter auch zwei Platten umfassen, zwischen denen z. B. ein Schultergurt eines Rucksacks oder ein anderes Teil der Trageinrichtung eingeklemmt werden kann. Darüber hinaus sind viele weitere Ausführungen denkbar.

### Kurze Beschreibung der Zeichnungen

Bevorzugte Ausführungsformen des erfindungsgemäßen Tragegurts bzw. des erfindungsgemäßen Tragesystems werden im Folgenden anhand der Figuren näher erläutert. Dabei zeigt:
- Fig. 1:: eine schematische Darstellung eines ersten, erfindungsgemäßen Tragegurts zum Tragen einer Kamera oder eines anderen mobilen Gegenstands;
- Fig. 2a, b:: verschiedene Ansichten eines Adapters zum Befestigen am Schultergurt eines Rucksacks;
- Fig. 3:: einen Schnellverschlussmechanismus nicht Teil der Erfindung;
- Fig. 4:: einen Schnellverschlussmechanismus nicht Teil der Erfindung,
- Fig. 5:: einen erfindungsgemäßen Tragegurt für einen tragbaren Gegenstand gemäß einer dritten Ausführungsform der Erfindung,
- Fig. 6a, b, c:: ein erstes Schnellverschlusselement,
- Fig.7:: ein zweites Schnellverschlusselement eines erfindungsgemäßen Tragesystems samt Adapter und Fixiereinrichtung,
- Fig. 8a, b:: das zweite Schnellschlusselement an einem Schultergurt einer Trageeinrichtung, und
- Fig. 9:: eine Befestigungsvorrichtung.

### Ausführungsformen der Erfindung

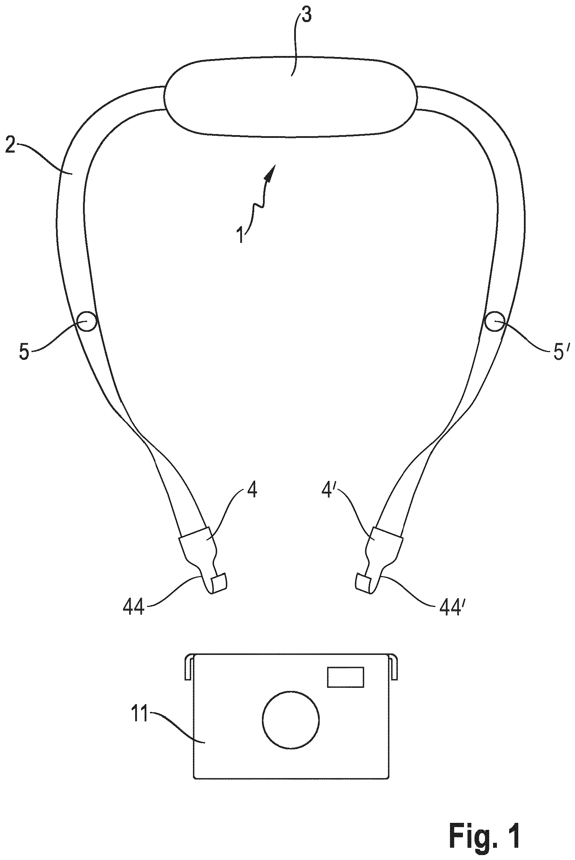

Fig. 1 zeigt eine erste Ausführungsform eines erfindungsgemäßen Tragegurts 1 zum Tragen einer Kamera 10 oder eines beliebigen anderen tragbaren Gegenstands der beispielsweise um den Nacken herum gelegt oder über die Schulter getragen werden kann. Der Tragegurt 1 umfasst im Wesentlichen ein Gurtband 2 mit einer Polsterung 3. An den beiden Enden des Gurtbandes 2 ist jeweils ein Anknüpfungspunkt mit einer Befestigungseinrichtung 4, 4' zum Befestigen des tragbaren Gegenstands vorgesehen. Im dargestellten Ausführungsbeispiel ist an den Gurtenden jeweils ein Haken 44, 44' als Befestigungseinrichtung 4, 4' vorgesehen. Alternativ könnte natürlich auch jede andere aus dem Stand der Technik bekannte Befestigungseinrichtung vorgesehen sein.

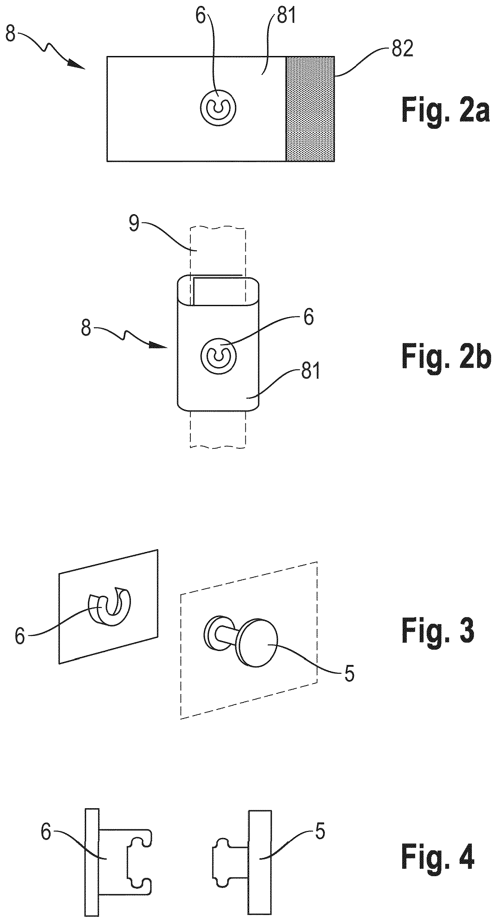

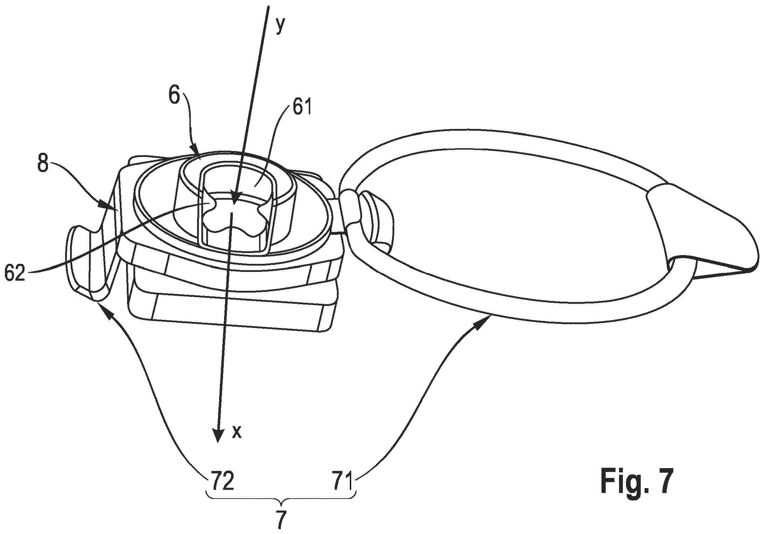

Wenn ein erfindungsgemäßer Tragegurt um den Nacken bzw. über die Schulter getragen wird, wird der Nacken bzw. die Schulter des Trägers ständig durch das Gewicht des getragenen Objekts belastet. Um dies zu vermeiden, umfasst der in den Fig. dargestellte Tragegurt zwei Schnellverschlusselemente 5, 5', die Bestandteil eines Schnellverschlussmechanismus sind, der die beiden ersten und jeweils ein korrespondierendes zweites Schnellverschlusselement 6 (siehe Fig. 2a, 7) umfasst. Das bzw. die zweiten Schnellverschlusselemente 6 können beispielsweise an einem Rucksack oder einem Kleidungsstück befestigt sein. Zum Tragen der Kamera 10 bzw. eines anderen mobilen Gegenstands werden die ersten Schnellverschlusselemente 5 mit den korrespondierenden zweiten Schnellverschlusselementen 6 verriegelt, wodurch die Gewichtskraft über den unteren Abschnitt des Gurtbandes 2 in die vom Nutzer getragene Trageinrichtung, wie z. B. einen Rucksack oder ein Kleidungsstück, eingeleitet wird. Der Nacken bzw. die Schulter des Nutzers ist somit entlastet.

Um das getragene Objekt zu bedienen und beispielsweise eine Kamera 10 vor das Auge bzw. ins Gesichtsfeld, am gestreckten Arm auf Augenhöhe oder über den Kopf zu führen, muss der Nutzer lediglich den Gegenstand aus der Verriegelungsposition nach oben in X-Richtung bewegen und eine nach oben gerichtete Zugkraft ausüben. Der Schnellverschlussmechanismus ist gemäß der Erfindung derart ausgebildet, dass die ersten Schnellverschlusselemente 5, 5' durch bloßen Zug am Gurtband 2 von den korrespondierenden zweiten Schnellverschlusselementen 6 gelöst werden können. Die Kamera 10 kann somit - soweit es der Tragegurt 1 erlaubt - ungehindert bewegt werden, ohne den Fotografen einzuschränken.

Die ersten Schnellverschlusselemente 5, 5' sind derart ausgeführt, dass der Schnellverschlussmechanismus nur bei Zug in einer bestimmten Richtung, beispielsweise nach oben in X-Richtung, auslöst. Bei Zug in einer anderen Richtung, wie beispielsweise zur Seite oder nach unten, löst der Mechanismus dagegen nicht aus.

Die beiden ersten Schnellverschlusselemente 5, 5' sind derart am Gurtband 2 befestigt, dass das Gurtband 2, wenn es um den Nacken getragen wird, am Nacken entlastet ist. Die Gewichtskraft des getragenen Gegenstands wird in diesem Fall von der vom Nutzer getragenen Trageinrichtung, wie z. B. einer Weste oder einem Rucksack, aufgenommen und großflächig über den Körper des Nutzers verteilt.

Wie zu erkennen ist, befinden sich die beiden ersten Schnellverschlusselemente 5, 5' etwa im gleichen Abstand zu den Befestigungseinrichtungen 4, 4', so dass das Gewicht des getragenen Gegenstands 10 gleichmäßig auf die linke und rechte Seite verteilt wird.

Der Tragegurt 1 aus Fig. 1 umfasst vorzugsweise mehrere Verstelleinrichtungen (nicht gezeigt) zum Verstellen der Länge des Tragegurts 1, nämlich wenigstens eine erste Verstelleinrichtung, mittels derer der Abstand zwischen einem ersten Schnellverschlusselement 5 und einer zugehörigen Befestigungseinrichtung verstellt werden kann und wenigstens eine zweite Verstelleinrichtung, mit der die Länge des Tragegurts 1 auf der anderen Seite des Schnellverschlusselements variiert werden kann.

Bei einem Tragegurt 1 mit zwei ersten Schnellverschlusselementen 5, 5' ist vorzugsweise für jedes der Schnellverschlusselemente 5, 5' eine erste Verstelleinrichtung zwischen dem jeweiligen Schnellverschlusselement 5, 5' und der zugehörigen Befestigungseinrichtung 4, 4' vorgesehen. Darüber hinaus ist wenigstens eine Verstelleinrichtung zum Verstellen der Länge des Gurtbandes 2 zwischen den beiden ersten Schnellverschlusselementen 5 angeordnet. Dadurch kann die Länge des Gurtbandes 2 zum einen an verschiedene Körpergrößen und verschiedene Bekleidungen wie einen Schal oder eine Jacke mit Kapuze angepasst werden; zum anderen kann die freie Traglänge, also der Abstand zwischen den ersten Schnellverschlusselementen 5, 5' und den zugehörigen Befestigungseinrichtungen 4, 4' nach Belieben eingestellt werden.

Fig. 2a zeigt eine Ausführungsform eines Adapters 8 mit einem zweiten Schnellverschlusselement 6, an dem ein erstes Schnellverschlusselement eingehängt werden kann. Der Adapter 8 ist in diesem Fall dazu vorgesehen, am Schultergurt eines Rucksacks befestigt zu werden. Er besteht hier aus einem flächigen Stück Stoff 81 mit einem Klettverschluss 82, so dass er schnell am Rucksack befestigt oder davon abgenommen werden kann.

Fig. 2b zeigt den Adapter 8 von Fig. 2a in einem Zustand, in dem er an einem Schultergurt 9 eines Rucksacks befestigt ist. Andere Ausführungen eines Adapters 8, die in anderer Weise am Rucksack oder einem Kleidungsstück befestigt werden können, sind gleichermaßen denkbar. So könnte der Adapter beispielsweise an der Trageinrichtung eingehängt oder daran festgebunden werden. Dem Fachmann stehen hierzu vielfältige Möglichkeiten zur Verfügung.

Fig. 3 zeigt einen Schnellverschlussmechanismus mit einem ersten Schnellverschlusselement 5 und einem zweiten Schnellverschlusselement nicht Teil der Erfindung. Das erste Schnellverschlusselement 5 ist hier als Zapfen mit einem verbreiterten Kopf ausgebildet, der an einem korrespondierenden zweiten Schnellverschlusselement 6 eingehakt wird. Das zweite Schnellverschlusselement 6 umfasst eine Öffnung, in die der Kopf von oben eingeführt werden kann. In anderen seitlichen Richtungen sowie nach vorne ist das zweite Schnellverschlusselement 6 geschlossen. Der Schnellverschlussmechanismus kann somit nur durch eine Relativbewegung des ersten Schnellverschlusselements 5 nach oben gelöst werden.

Fig. 4 zeigt einen Schnellverschlussmechanismus mit einem ersten Schnellverschlusselement 5 und einem zweiten Schnellverschlusselement 6 nicht Teil der Erfindung. Das erste Schnellverschlusselement 5 ist dabei als Zapfen mit einem umfangsseitigen Wulst ausgebildet, der in seiner Längsrichtung in das zweite Schnellverschlusselement 6 eingedrückt wird. Das erste Schnellverschlusselement 5 weist einen pilzähnlichen Kopf auf. Das zweite Schnellverschlusselement 6 hat eine korrespondierende Öffnung, in die der Zapfen eingeführt werden kann. Beim Eindrücken des Zapfens verformt sich das zweite Schnellverschlusselement 6 und/oder der Wulst geringfügig. Der Wulst kommt schließlich in einer Hinterschneidung des zweiten Schnellverschlusselements 6 zu liegen und wird dort formschlüssig gehalten. Durch Zug in Längsrichtung des Zapfens kann der Schnellverschlussmechanismus wieder gelöst werden.

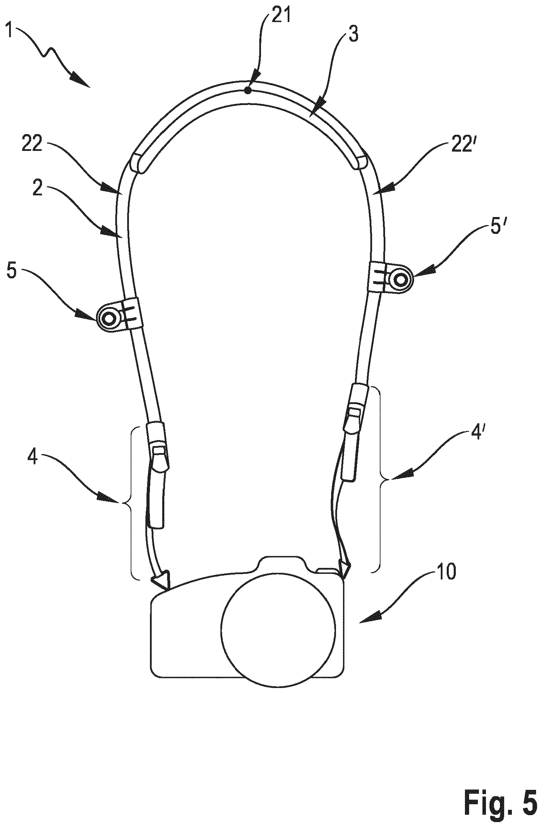

Fig. 5 zeigt eine dritte Ausführungsform eines erfindungsgemäßen Tragegurts 1 zum Tragen eines als Kamera 10 ausgebildeten tragbaren Gegenstands. Der Tragegurt weist ein U-förmiges Gurtband 2 mit einem runden Querschnitt auf. Das Gurtband 2 hat einen Scheitelpunkt 21, von dem sich zwei Schenkel 22, 22' des Gurtbandes 2 hinzu zwei Befestigungseinrichtungen 4, 4' erstrecken. Die beiden Schenkel 22, 22' weisen die gleiche Länge auf. Im Bereich des Scheitelpunkts 21 weist der Tragegurt 1 eine Polsterung 3 auf. Zwischen dem Scheitelpunkt 21 und den beiden Befestigungseinrichtungen 4, 4' sind erste Schnellverschlusselemente 5, 5' am Gurtband 2 befestigt. Der Tragegurt 1 ist mittels der Befestigungseinrichtungen 4, 4' mit der Kamera 10 verbunden.

Zum Einhängen der ersten Schnellverschlusselemente 5, 5' in die zweiten Schnellverschlusselemente 6 muss lediglich die Kamera 10 bzw. die beiden Enden des Gurtbandes 2 angehoben werden. Dabei bewegen sich die ersten Schnellerschlusselemente 5, 5' nach oben bzw. außen in die Nähe der zweiten Schnellverschlusselemente 6, welche an den Rucksackträgern 13 befestigt sind. Sobald sich die ersten Schnellverschlusselemente 5, 5' in der Nähe der zweiten Schnellverschlusselemente 6 befinden, reicht die Magnetkraft von in den ersten/zweiten Schnellverschlusselementen angeordneten Magneten aus, die ersten Schnellverschlusselemente 5, 5' in y-Richtung anzuziehen und in die Verriegelungsposition zu befördern.

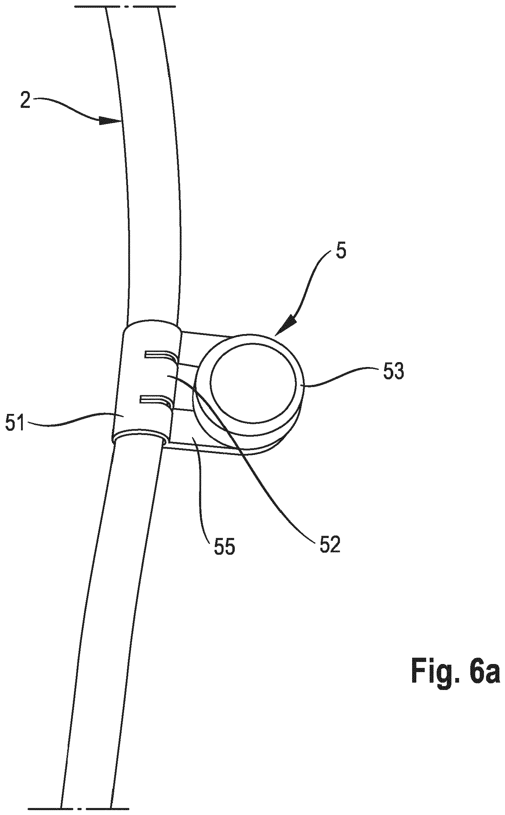

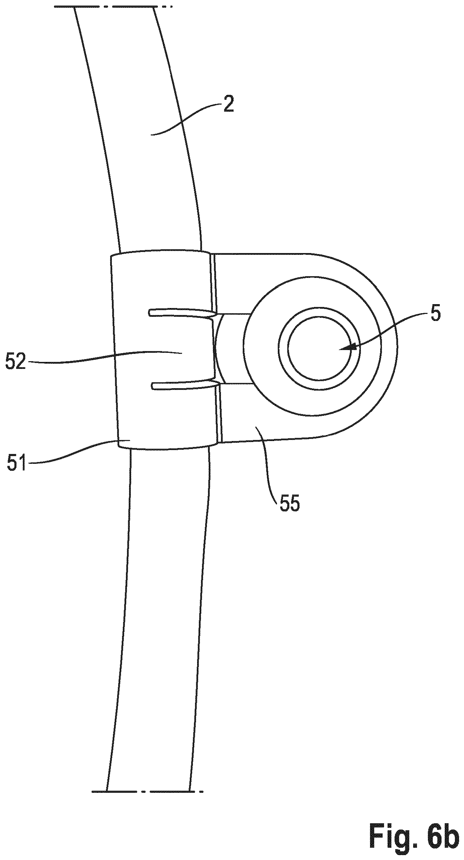

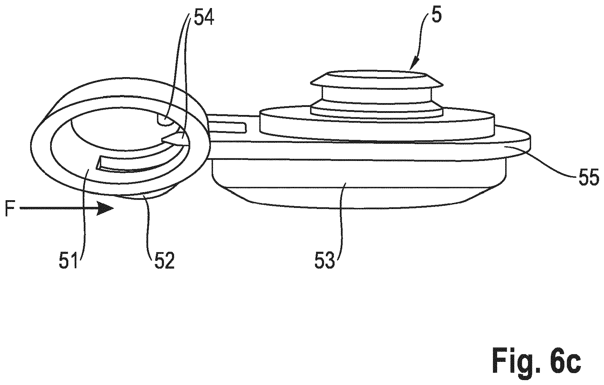

In Fig. 6a ist ein erstes Schnellverschlusselement 5 am Gurtband 2 näher dargestellt. Das erste Schnellverschlusselement 5 ist über eine röhrenförmige Gurtbanddurchführung 51 mit dem Gurtband 2 verbunden. Das Gurtband 2 verläuft durch die röhrenförmige Gurtbanddurchführung 51 hindurch. Die Gurtbanddurchführung 51 weist ein Klemmelement 52 auf. Über das Klemmelement 52 ist die Gurtbanddurchführung 51 bzw. das erste Schnellverschlusselement 5 längs des Gurtbandes 2 fixierbar. Dazu ist ein Exzenter 53 in Form einer Schraube mit einem exzentrisch ausgebildeten Kopf derart angeordnet, dass er bei seinem Verdrehen das Klemmelement 52 in Richtung des Gurtbandes 2 bewegt. Ferner weist das Klemmelement 52 Widerhaken oder Zähne 54 an seiner dem Gurtband 2 zugewandten Seite auf, welche mit dem Gurtband 2 beim Klemmen in Eingriff gelangen (vgl. Fig. 6c). Das erste Schnellverschlusselement 5 ist in der in Fig. 6 gezeigten Abbildung durch den Exzenter 53 verdeckt und auf dessen Rückseite angeordnet. Fig. 6b zeigt die Rückseite mit dem ersten Schnellverschlusselement 5. Das erste Schnellverschlusselement weist im Wesentlichen ein kreisrunder Kopf mit einen umlaufenden Hinterschnitt auf und hat somit eine Form ähnlich eines Pilzes.

Wie in der in Fig. 6c dargestellten Seitenansicht der Gurtbanddurchführung 51 gezeigt, weist das Klemmelement 52 Zähne 54 auf. Die Zähne 54 greifen in das nicht gezeigte Gurtband 2 ein. Durch Aufbringen einer Kraft F werden die Zähne aus dem Eingriff mit dem Gurtband 2 herausgenommen, so dass die Gurtbanddurchführung 51 entlang des Gurtbandes verschoben werden kann.

Fig. 7 zeigt das zweite Schnellverschlusselement 6 samt Adapter 8 und Fixiereinrichtung 7. Das zweite Schnellverschlusselement 6 weist eine Aufnahme 61 für das erste Schnellschlusselement 5 auf. Das erste Schnellverschlusselement 5, insbesondere der Pilzkopf des Schnellverschlusselements 5, ist in Y-Richtung in die Aufnahme 61 einbringbar. Die Y-Richtung ist dabei im Wesentlichen orthogonal zur Grundfläche des zweiten Schnellverschlusselements 6 bzw. des Adapters 8. In X-Richtung, welche orthogonal zur Y-Richtung verläuft, ist das erste Schnellverschlusselement 5 vom zweiten Schnellverschlusselement 6 lösbar. In allen übrigen Richtungen ist das erste Schnellverschlusselement 5 mit dem zweiten Schnellverschlusselement 6 formschlüssig verbunden. Das zweite Schnellverschlusselement 6 weist ein Federelement 62 auf. Durch den Federring 62 wird zum einen ein Lösen, welches nicht in X-Richtung erfolgt, verhindert und zum andern wird durch die Federkraft des Federrings 62 ein (unbeabsichtigtes) Lösen in X-Richtung vermieden bzw. erschwert. Zusätzlich werden die beiden Schnellverschlusselemente 5, 6 über (nicht gezeigte) Magneten in der Verriegelungsposition gehalten. Die Magnete sind im Pilzkopf des ersten Schnellverschlusselements 5 bzw. dem Boden des zweiten Schnellverschlusselements 6 angeordnet.

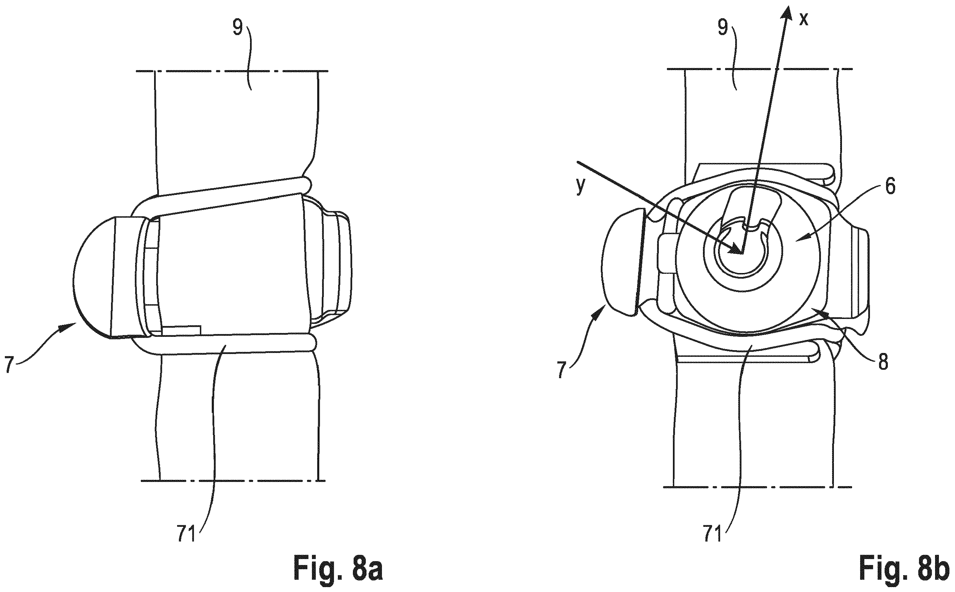

An dem Adapter 8 ist eine Fixiereinrichtung 7 in Form eines elastischen Bandes 71 angeordnet. Das elastische Band 71 kann, wie beispielsweise in den Fig. 8 a, b gezeigt, um die Trageeinrichtung, beispielsweise den Schultergurt 9 eines Rucksacks, herum geschlungen und an diesem befestigt werden. Dazu wird das elastische Band 71 in einen Haken 72 eingehängt. Dadurch ist das zweite Schnellverschlusselement 6 in einfacher Art und Weise an der Trageeinrichtung 9 befestigbar und flexibel einsetzbar.

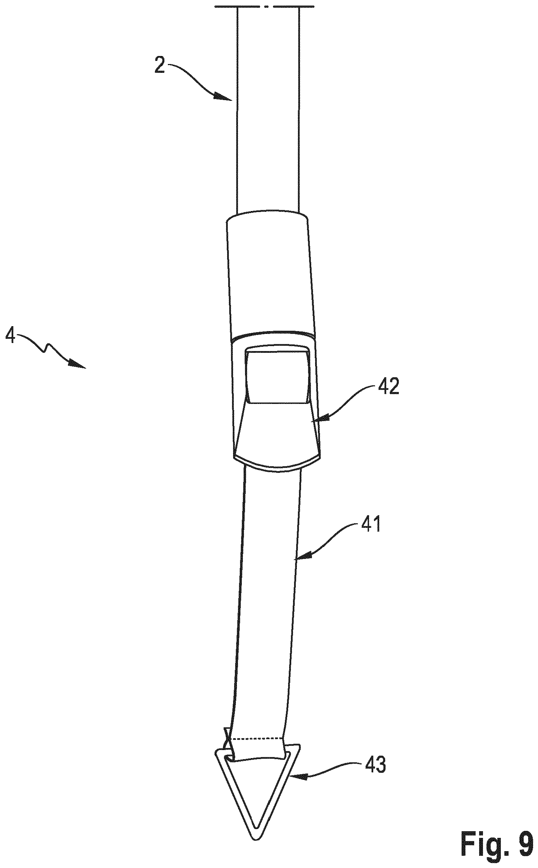

Fig. 9 zeigt die Befestigungseinrichtung 4. Die Befestigungseinrichtung 4 schließt sich direkt an das runde Gurtband 2 an und ist am Ende des Gurtbands 2 lösbar mit diesem verbunden. Die Befestigungseinrichtung 4 umfasst eine Öse 43, welche mit dem zu tragenden Gegenstand, der Kamera 10, verbindbar ist. Die Öse 43 ist mit einem Flachband 41 verbunden. Das Flachband 41 ist über eine Längenverstelleinrichtung 42 mit dem Gurtband 2 verbunden.

### Bezugszeichenliste:

- 1: Tragegurt
- 2: Gurtband
- 21: Scheitelpunkt
- 22, 22': Schenkel
- 3: Polsterung
- 4, 4': Befestigungseinrichtung
- 41: Flachband
- 42: Längenverstelleinrichtung
- 43: Öse
- 44, 44': Haken
- 5, 5': erstes Schnellverschlusselement
- 51: Gurtbanddurchführung
- 52: Klemmelement
- 53: Exzenter
- 54: Zähne
- 55: Flügel
- 6: zweites Schnellverschlusselement
- 61: Aufnahme
- 62: Federelement
- 7: Fixiereinrichtung
- 71: elastisches Band
- 72: Haken
- 8: Adapter
- 81: Stoff
- 82: Klettverschluss
- 9: Schultergurt
- 10: Kamera

## Patentansprüche

1. Tragegurt (1) mit einem Gurtband (2) und wenigstens einer Befestigungseinrichtung (4), die an zumindest einem Ende des Gurtbands (2) angeordnet ist, zum Befestigen eines tragbaren Gegenstands (10), wie z. B. einer Kamera, wobei am Gurtband (2) wenigstens ein erstes Schnellverschlusselement (5) befestigt ist, das Bestandteil eines Schnellverschlussmechanismus ist, der das erste (5) und ein korrespondierendes zweites Schnellverschlusselement (6) umfasst, wobei das erste Schnellverschlusselement (5) aus einer Verriegelungsposition, in welcher das zweite Schnellverschlusselement (6) mit dem ersten Schnellverschlusselement (5) verriegelt ist, entlang einer ersten Richtung (X) vom korrespondierenden zweiten Schnellverschlusselement (6) lösbar ist und entlang einer zweiten Richtung (Y) in die Verriegelungsposition verbringbar ist und
wobei das erste Schnellverschlusselement (5) entlang des Gurtbandes (2) verschiebbar und am Gurtband (2) fixierbar ist,
**dadurch gekennzeichnet, dass**
die erste und zweite Richtung (X, Y) orthogonal zueinander verlaufen.

2. Tragegurt nach Anspruch 1, **dadurch gekennzeichnet, dass** das Gurtband (2) derart steif ausgebildet ist, dass bei einer Verschiebung der Enden des Gurtbands (2) in Richtung eines Scheitelpunkts des im Wesentlichen U-förmigen Gurtbands (2) zum Verriegeln, sich zumindest Bereiche von zwei sich vom Scheitelpunkt weg erstreckenden Schenkeln des Gurtbands (2) bogenförmig in den Bereich der Verriegelungsposition auseinanderbewegen.

3. Tragegurt (1) nach Anspruch 1 oder 2, **dadurch gekennzeichnet, dass** das der Schnellverschlussmechanismus derart ausgebildet ist, dass die korrespondierenden ersten und zweiten Schnellverschlusselemente (5, 6) eine formschlüssige Verbindung eingehen.

4. Tragegurt (1) nach einem der vorherigen Ansprüche, **dadurch gekennzeichnet, dass** das erste Schnellverschlusselement (5) mittels eines Magneten und/oder einer Schnappverbindung in der Verriegelungsposition gehalten wird.

5. Tragegurt (1) nach einem der vorherigen Ansprüche, **dadurch gekennzeichnet, dass** das erste Schnellverschlusselement (5) in der Verriegelungsposition mittels eines Sicherungselements festlegbar ist.

6. Tragegurt (1) nach einem der vorherigen Ansprüche, **dadurch gekennzeichnet, dass** das Gurtband (2) zumindest bereichsweise durch ein Stahlseil, ein Kunststoffelement oder in ein Textil eingewobene, versteifende Fasern verstärkt ist.

7. Tragegurt (1) nach einem der vorherigen Ansprüche, **dadurch gekennzeichnet, dass** das Gurtband (2) einen im Wesentlichen kreisrunden Querschnitt aufweist.

8. Tragegurt (1) nach einem der vorherigen Ansprüche, **dadurch gekennzeichnet, dass** das erste Schnellverschlusselement (5) durch Verdrehen eines Exzenters (53) klemmend gegen Verschieben am Gurtband (2) fixierbar ist.

9. Tragegurt nach Anspruch 7 und 8, **dadurch gekennzeichnet, dass** das erste Schnellverschlusselement (5) über eine röhrenförmige Gurtbanddurchführung (51) am Gurtband (2) befestigt ist und das Gurtband (2) über einen exzentrisch ausgebildeten Kopf einer Schraube in der Gurtbanddurchführung (51) fixierbar ist.

10. Tragegurt (1) nach einem der vorhergehenden Ansprüche, **dadurch gekennzeichnet, dass** die korrespondierenden ersten und zweiten Schnellverschlusselemente (5, 6) nur entlang der ersten Richtung (X), insbesondere durch Zug, voneinander lösbar sind.

11. Tragegurt (1) nach einem der vorhergehenden Ansprüche, **dadurch gekennzeichnet, dass** das Gurtband (2) an seinen beiden Enden je eine Befestigungseinrichtung (4) zum Verbinden mit dem tragbaren Gegenstand (10) aufweist, am Gurtband (2) wenigstens zwei erste Schnellverschlusselemente (5) befestigt sind und vorzugsweise die beiden ersten Schnellverschlusselemente (5) jeweils im gleichen Abstand zur jeweiligen Befestigungseinrichtung (4) am Gurtband (2) befestigt sind.

12. Tragesystem zum Tragen eines Gegenstands (10) am Körper, umfassend einen Tragegurt (1) nach einem der vorhergehenden Ansprüche, wenigstens einen Adapter (8), der mit dem zweiten Schnellverschlusselement (6) verbunden ist, und eine Fixiereinrichtung (7) zum Befestigen des Adapters (8) an einer Trageinrichtung (9).

13. Tragesystem nach Anspruch 12, **dadurch gekennzeichnet, dass** die Trageeinrichtung (9) ein Schultergurt (9) eines Rucksacks ist.

14. Tragesystem nach Anspruch 13, **dadurch gekennzeichnet, dass** das erste Schnellverschlusselement (5) bei Verwendung der Trageeinrichtung (9) durch die Schwerkraft in der Verriegelungsposition gehalten wird.

15. Tragesystem nach einem der Ansprüche 12 bis 14, **dadurch gekennzeichnet, dass** die Fixiereinrichtung (7) einen Klettverschluss oder ein Gummiband (71) aufweist.

## Claims

1. Carrying strap (1) comprising a strap (2) and at least one fastening device (4), which is arranged at at least one end of the strap (2) and is intended for fastening a portable object (10), e.g. a camera, wherein the strap (2) has fastened on it at least one first quick-locking element (5), which is a constituent part of a quick-locking mechanism comprising the first quick-locking element (5) and a corresponding second quick-locking element (6), wherein the first quick-locking element (5) can be released from the corresponding second quick-locking element (6) along a first direction (X) from a locking position, in which the second quick-locking element (6) is locked to the first quick-locking element (5), and can be moved into the locking position along a second direction (Y), and wherein the first quick-locking element (5) can be fixed on the strap (2) such that it can be displaced along the strap (2),
**characterized in that**
the first and second directions (X, Y) run orthogonally in relation to one another.

2. Carrying strap according to Claim 1, **characterized in that** the strap (2) is designed to be stiff enough so that, when the ends of the strap (2) are displaced in the direction of a vertex of the essentially U-shaped strap (2) for locking purposes, at least certain regions of two limbs of the strap (2), said limbs extending away from the vertex, move apart from one another in arcuate form into the region of the locking position.

3. Carrying strap (1) according to Claim 1 or 2, **characterized in that** the quick-locking mechanism is designed such that the corresponding first and second quick-locking elements (5, 6) undergo a form-fitting connection.

4. Carrying strap (1) according to one of the preceding claims, **characterized in that** the first quick-locking element (5) is retained in the locking position by means of a magnet and/or a snap-fit connection.

5. Carrying strap (1) according to one of the preceding claims, **characterized in that** the first quick-locking element (5) can be arrested in the locking position by means of a securing element.

6. Carrying strap (1) according to one of the preceding claims, **characterized in that** the strap (2) is reinforced at least in certain regions by a steel cable, a plastic element or stiffening fibres woven into a textile.

7. Carrying strap (1) according to one of the preceding claims, **characterized in that** the strap (2) has an essentially circular cross section.

8. Carrying strap (1) according to one of the preceding claims, **characterized in that** the first quick-locking element (5) can be fixed on the strap (2), such that it is clamped against displacement, by virtue of an eccentric (53) being rotated.

9. Carrying strap according to Claims 7 and 8, **characterized in that** the first quick-locking element (5) is fastened on the strap (2) via a tubular strap through-passage (51), and the strap (2) can be fixed in the strap through-passage (51) via an eccentrically formed head of a screw.

10. Carrying strap (1) according to one of the preceding claims, **characterized in that** the corresponding first and second quick-locking elements (5, 6) can be released from one another, in particular by pulling action, only along the first direction (X).

11. Carrying strap (1) according to one of the preceding claims, **characterized in that** the strap (2) has, at its two ends, a respective fastening device (4) for connection to the portable object (10), at least two first quick-locking elements (5) are fastened on the strap (2), and preferably the two first quick-locking elements (5) are fastened on the strap (2) in each case at an equal distance from the respective fastening device (4).

12. Carrying system for carrying an object (10) on the body, comprising a carrying strap (1) according to one of the preceding claims, at least one adapter (8), which is connected to the second quick-locking element (6), and a fixing device (7) for fastening the adapter (8) on a carrying device (9).

13. Carrying system according to Claim 12, **characterized in that** the carrying device (9) is a shoulder strap (9) of a rucksack.

14. Carrying system according to Claim 13, **characterized in that**, if use is made of the carrying device (9), the first quick-locking element (5) is retained in the locking position by gravitational force.

15. Carrying system according to one of Claims 12 to 14, **characterized in that** the fixing device (7) comprises a touch-and-close fastener or a rubber band (71).

## Revendications

1. Sangle de transport (1) comportant une bande de sangle (2) et au moins un dispositif de fixation (4) qui est disposé à au moins une extrémité de la bande de sangle (2), pour la fixation d'un objet portatif (10), par exemple d'un appareil photo, dans laquelle au moins un premier élément de fermeture rapide (5) est fixé à la bande de sangle (2), lequel fait partie d'un mécanisme de fermeture rapide qui comporte le premier élément de fermeture rapide (5) et un deuxième élément de fermeture rapide correspondant (6), dans laquelle le premier élément de fermeture rapide (5) peut être libéré du deuxième élément de fermeture rapide correspondant (6) le long d'une première direction (X) à partir d'une position de verrouillage dans laquelle le deuxième élément de fermeture rapide (6) est verrouillé avec le premier élément de fermeture rapide (5), et peut être amené à la position de verrouillage le long d'une deuxième direction (Y) et
dans laquelle le premier élément de fermeture rapide (5) est déplaçable le long de la bande de sangle (2) et peut être assujetti à la bande de sangle (2), **caractérisée en ce que**
les première et deuxième directions (X, Y) s'étendent de manière orthogonale l'une par rapport à l'autre.

2. Sangle de transport selon la revendication 1, **caractérisée en ce que** la bande de sangle (2) est réalisée de manière rigide de telle sorte que dans le cas d'un déplacement des extrémités de la bande de sangle (2) en direction d'un sommet de la bande de sangle (2) sensiblement en forme de U pour le verrouillage, au moins des régions de deux branches de la bande de sangle (2) qui s'étendent à partir du sommet s'éloignent les unes des autres de manière arquée dans la région de la position de verrouillage.

3. Sangle de transport (1) selon la revendication 1 ou 2, **caractérisée en ce que** le mécanisme de fermeture rapide est réalisé de telle sorte que les premier et deuxième éléments de fermeture rapide correspondants (5, 6) forment une liaison par complémentarité de forme.

4. Sangle de transport (1) selon l'une des revendications précédentes, **caractérisée en ce que** le premier élément de fermeture rapide (5) est maintenu dans la position de verrouillage au moyen d'un aimant et/ou d'une liaison par encliquetage.

5. Sangle de transport (1) selon l'une des revendications précédentes, **caractérisée en ce que** le premier élément de fermeture rapide (5) peut être immobilisé dans la position de verrouillage au moyen d'un élément de blocage.

6. Sangle de transport (1) selon l'une des revendications précédentes, **caractérisée en ce que** la bande de sangle (2) est renforcée, au moins dans certaines régions, par un câble en acier, un élément en matière synthétique ou des fibres de renforcement tissées en un textile.

7. Sangle de transport (1) selon l'une des revendications précédentes, **caractérisée en ce que** la bande de sangle (2) présente une section transversale sensiblement circulaire.

8. Sangle de transport (1) selon l'une des revendications précédentes, **caractérisée en ce que** le premier élément de fermeture rapide (5) peut être assujetti par serrage à la bande de sangle (2) afin d'empêcher le déplacement de celle-ci, par rotation d'un excentrique (53).

9. Sangle de transport selon les revendications 7 et 8, **caractérisée en ce que** le premier élément de fermeture rapide (5) est fixé à la bande de sangle (2) par le biais d'un passage de bande de sangle tubulaire (51) et la bande de sangle (2) peut être assujettie dans le passage de bande de sangle (51) par le biais d'une tête, réalisée de manière excentrée, d'une vis.

10. Sangle de transport (1) selon l'une des revendications précédentes, **caractérisée en ce que** les premier et deuxième éléments de fermeture rapide correspondants (5, 6) ne peuvent être libérés l'un de l'autre que le long de la première direction (X), en particulier par traction.

11. Sangle de transport (1) selon l'une des revendications précédentes, **caractérisée en ce que** la bande de sangle (2) comprend, à ses deux extrémités, respectivement un dispositif de fixation (4) pour la liaison à l'objet portatif (10), au moins deux premiers éléments de fermeture rapide (5) sont fixés à la bande de sangle (2) et de préférence les deux premiers éléments de fermeture rapide (5) sont fixés à la bande de sangle (2) respectivement à la même distance par rapport au dispositif de fixation respectif (4).

12. Système de transport permettant de transporter un objet (10) sur le corps, comportant une sangle de transport (1) selon l'une des revendications précédentes, au moins un adaptateur (8), qui est relié au deuxième élément de fermeture rapide (6), et un dispositif d'assujettissement (7) pour la fixation de l'adaptateur (8) à un dispositif de transport (9).

13. Système de transport selon la revendication 12, **caractérisé en ce que** le dispositif de transport (9) est une bretelle (9) d'un sac à dos.

14. Système de transport selon la revendication 13, **caractérisé en ce que** le premier élément de fermeture rapide (5) est maintenu dans la position de verrouillage par la force de gravité lors de l'utilisation du dispositif de transport (9).

15. Système de transport selon l'une des revendications 12 à 14, **caractérisé en ce que** le dispositif d'assujettissement (7) est une fermeture autoagrippante ou une bande en caoutchouc (71).
